(19) Europäisches Patentamt
European Patent Office
Office européen des brevets

(11) **EP 3 933 484 B1**

(12) **FASCICULE DE BREVET EUROPEEN**

(45) Date de publication et mention de la délivrance du brevet:
**28.12.2022 Bulletin 2022/52**

(21) Numéro de dépôt: **21180310.1**

(22) Date de dépôt: **18.06.2021**

(51) Classification Internationale des Brevets (IPC):
***G02B 26/06*** *(2006.01)*    ***G02B 26/10*** *(2006.01)*
***G02B 27/00*** *(2006.01)*

(52) Classification Coopérative des Brevets (CPC):
**G02B 27/0087; G02B 26/06; G02B 26/101;
G02B 26/103; G02B 26/106**

(54) **SCANNER OPTIQUE**

OPTISCHER SCANNER

OPTICAL SCANNER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.07.2020 FR 2006927**

(43) Date de publication de la demande:
**05.01.2022 Bulletin 2022/01**

(73) Titulaire: **Commissariat à l'énergie atomique
et aux énergies alternatives
75015 Paris (FR)**

(72) Inventeurs:
* **MOLLARD, Laurent
38054 GRENOBLE CEDEX 09 (FR)**
* **DIEPPEDALE, Christel
38054 GRENOBLE CEDEX 09 (FR)**
* **FANGET, Stéphane
38054 GRENOBLE CEDEX 09 (FR)**
* **FOWLER, Daivid
38054 GRENOBLE CEDEX 09 (FR)**
* **HUE, Jean
38054 GRENOBLE CEDEX 09 (FR)**

(74) Mandataire: **Brevalex
95, rue d'Amsterdam
75378 Paris Cedex 8 (FR)**

(56) Documents cités:
**WO-A1-2018/222727     FR-A1- 2 923 092**

* **HOLMSTROM SVEN T S ET AL: "MEMS Laser
Scanners: A Review", JOURNAL OF
MICROELECTROMECHANICAL SYSTEMS, IEEE
SERVICE CENTER, US, vol. 23, no. 2, 1 avril 2014
(2014-04-01), pages 259-275, XP011544460, ISSN:
1057-7157, DOI: 10.1109/JMEMS.2013.2295470
[extrait le 2014-03-31]**

EP 3 933 484 B1

**Description**

**DOMAINE TECHNIQUE**

La présente invention se rapporte au domaine des microsystèmes opto électromécaniques (« MOEMS » selon la terminologie Anglo-Saxonne). En particulier, la présente invention concerne un scanner optique pourvu d'au moins deux scanners élémentaires, dits, respectivement, premier scanner et deuxième scanner agencés pour balayer l'espace environnant du scanner optique chacun au moyen d'un faisceau extrait obtenu à partir d'un faisceau optique principal et selon une résolution optique différente. Notamment, le premier scanner et le deuxième scanner sont agencés pour balayer, au moyen des faisceaux extraits, une première surface et une deuxième surface, la deuxième surface étant d'une étendue inférieure à celle de la première surface et incluse dans la première surface.

**ÉTAT DE LA TECHNIQUE ANTÉRIEURE**

Les scanners ou les micro-scanners 2D sont des dispositifs permettant de balayer avec un faisceau lumineux une scène selon une voire deux dimensions. Ces scanners peuvent notamment être mis en œuvre dans les dispositifs de type LIDAR (« Light Détection And Ranging systems ») à des fins de détection ou d'imagerie.

En pratique le balayage d'une surface ou d'un objet par un faisceau lumineux peut être réalisé au moyen d'un ou plusieurs micro-miroirs mobiles.

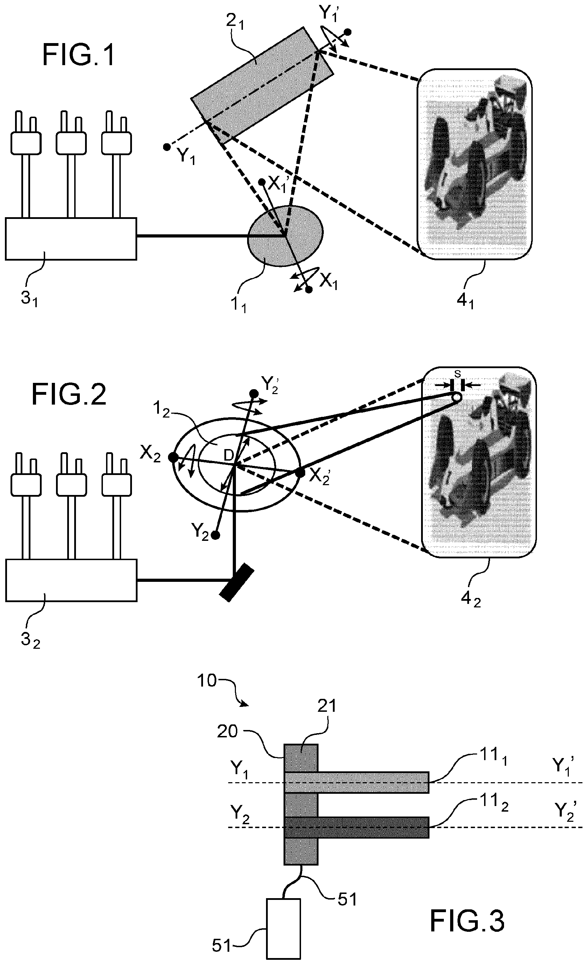

A cet égard, la figure 1 (extraite du document [1] cité à la fin de la description) illustre une première architecture possible d'un tel dispositif pourvu de deux micro-miroirs, dits respectivement premier micro-miroir $1_1$ et deuxième micro-miroir $2_1$, agencés pour pivoter autour, respectivement, d'un premier axe pivot $X_1X_1'$ et d'un deuxième axe pivot $Y_1Y_1'$ non parallèles. En particulier, ces deux micro-miroirs $1_1$ et $2_1$ sont agencés de sorte qu'un faisceau lumineux émis par une source lumineuse $3_1$ soit réfléchi par le premier micro-miroir $1_1$ en direction du deuxième micro-miroir $2_1$ qui le réfléchit à son tour en direction par exemple d'un écran $4_1$. La rotation de chacun des micro-miroirs $1_1$ et $2_1$ autour de leur axe pivot respectif permet ainsi d'effectuer un balayage d'une surface avec le faisceau lumineux par exemple à des fins d'imagerie ou de détection.

Une telle architecture n'est cependant pas satisfaisante.

En effet, cette dernière, du fait de la présence de deux micro-miroirs, est peu compacte.

Par ailleurs, cette architecture requiert un alignement précis des deux micro-miroirs et est par voie de conséquence difficile à réaliser.

Enfin, les micro-miroirs sont également susceptibles de subir un endommagement, notamment par un échauffement induit par le faisceau lumineux.

Afin de pallier en partie ces problèmes, une deuxième architecture, illustrée à la figure 2 (extraite du document [1] cité à la fin de la description), peut être envisagée. Cette dernière met en œuvre un unique micro-miroir $1_2$ monté pivotant autour de deux axes pivot $X_2X_2'$ et $Y_2Y_2'$ non parallèles.

L'oscillation de ce micro-miroir $1_2$ autour de l'un et l'autre des deux axes pivots $X_2X_2'$ et $Y_2Y_2'$ permet ainsi de balayer la surface d'un écran $4_1$ au moyen d'un faisceau lumineux issue d'une source lumineuse $3_2$ et réfléchie par ledit micro-miroir $1_2$.

Toutefois, cette deuxième architecture n'est pas non plus satisfaisante.

En effet, à l'instar de la première architecture, le micro-miroir $1_2$ est également susceptible de subir un échauffement induit par le faisceau lumineux.

Par ailleurs, cette deuxième architecture est également sensible à l'alignement de la source lumineuse $3_2$ et du micro-miroir $1_2$. L'alignement entre ces deux éléments est notamment sensible aux chocs subis par le dispositif mais également aux conditions de température et de pression imposées à ce dernier.

En outre, les oscillations du micro-miroir autour de l'un et l'autre des deux axes pivots $X_2X_2'$ et $Y_2Y_2'$, induites par un actionneur, ne sont jamais découplées de sorte que des diaphonies (« Crosstalk » selon la terminologie Anglo-Saxonne) mécaniques sont susceptibles d'intervenir.

De manière alternative aux architectures présentées ci-avant, des micro-scanners 2D à émetteur optique à commande de phase ou à réseau optique à commande de phase (« OPA » ou « Optical Phased Array » selon la terminologie Anglo-Saxonne) ont pu être proposés.

Ces derniers peuvent comprendre une pluralité de sources optiques susceptibles d'émettre chacune un rayonnement lumineux. Chacune de ses sources optiques est par ailleurs associée à des moyens de modulation de phase destinés à déphaser les rayonnements optiques les uns par rapport aux autres de manière à faire varier l'angle de propagation du rayonnement combiné issu de l'ensemble des sources optiques. Selon une configuration avantageuse, les sources optiques peuvent être issues d'une même source principale.

Ce principe de fonctionnement peut être extrapolé à une matrice 2D de sources optiques permettant un balayage d'un faisceau optique suivant deux directions différentes, par exemple perpendiculaires l'une par rapport à l'autre.

Toutefois, ces dispositifs ne sont pas non plus satisfaisants.

En effet, un tel dispositif reste contraint à une résolution optique qui lui est imposée par sa conception, et qui rend par conséquent ce dernier peu flexible d'emploi. En particulier, ce dispositif ne permet pas de balayer une surface donnée, ou une zone de ladite surface, à différentes résolutions optiques, par exemple à des fins d'analyse. Le document WO2018/222727 divulgue un scanner optique comprenant une poutre actionnable en flexion et en torsion.

Par conséquent, un but de la présente invention est de proposer un dispositif de balayage lumineux qui présente une flexibilité en termes de résolution optique, et/ou d'étendue de surface balayée.

Un autre but de la présente invention est de proposer un dispositif de balayage lumineux qui présente une compacité appréciable.

## EXPOSÉ DE L'INVENTION

Les buts de l'invention sont, au moins en partie, atteints par un scanner optique qui comprend :

- une source optique apte à émettre un faisceau optique principal ;
- au moins deux scanners élémentaires, dits, respectivement, premier et deuxième scanner, et qui comprennent respectivement :
- une première et une deuxième poutre pourvues, respectivement, d'une première et d'une deuxième partie mobile d'une part, et d'une première et d'une deuxième partie fixe d'autre part ;
- un premier et un deuxième actionneur agencés pour imposer une flexion ou une torsion, respectivement à la première et la deuxième partie mobile ;
- un premier et un deuxième réseau optique à commande de phase disposés sur ou dans, respectivement, la première et la deuxième partie mobile et au niveau desquels le faisceau optique principal est extrait, en partie, sous forme, respectivement, d'un premier et d'un deuxième faisceau ;

le premier et le deuxième scanner étant agencés pour balayer, selon une première et une deuxième direction, au moyen du premier et du deuxième faisceau, respectivement, une première et une deuxième surface, la deuxième surface étant d'une étendue inférieure à celle de la première surface et incluse dans la première surface.

Selon un mode de mise en œuvre, la première et la deuxième poutre sont agencées de sorte que la flexion de l'une et l'autre de ces deux poutres permet, respectivement, au premier et au deuxième faisceau de balayer, respectivement, la première et la deuxième surface selon la première direction, selon, respectivement, une première et une deuxième gamme d'angles longitudinaux, la première gamme d'angles longitudinaux présentant une étendue supérieure à celle de la deuxième gamme d'angles longitudinaux.

Selon un mode de mise en œuvre, la première et la deuxième partie mobile sont agencées pour se voir imposer une flexion, respectivement, d'une première et d'une deuxième amplitude, la deuxième amplitude étant strictement inférieure à la première amplitude.

Selon un mode de mise en œuvre, la première partie mobile présente une épaisseur, dite première épaisseur, supérieure à l'épaisseur, dite deuxième épaisseur, de la deuxième partie mobile.

Selon un mode de mise en œuvre, la première partie mobile présente une longueur, dite première longueur, inférieure à la longueur, dite deuxième longueur de la deuxième poutre.

Selon un mode de mise en œuvre, la première partie mobile présente une fréquence de vibration à la résonance, dite première fréquence, supérieure à la fréquence de vibration à la résonance, dite deuxième fréquence, de la deuxième partie mobile.

Selon un mode de mise en œuvre, le premier et le deuxième scanner comprennent respectivement, une première et une deuxième pluralité de guides d'ondes disposés sur ou dans, respectivement, la première et la deuxième partie mobile, chacune des pluralités de guides d'ondes étant destinée à diviser le faisceau optique principal en, respectivement, une première et deuxième pluralité de faisceaux optiques secondaires.

Selon un mode de mise en œuvre, la première pluralité de guide d'ondes comprend un nombre de guides d'ondes inférieur à celui de la deuxième pluralité de guides d'ondes.

Selon un mode de mise en œuvre, le premier et le deuxième réseau optique à commande de phase comprennent, respectivement, une première et une deuxième pluralité de déphaseurs optiques, chaque déphaseur optique de la première et de la deuxième pluralité de déphaseur optique étant couplé à un guide d'ondes, respectivement, de la première et de la deuxième pluralité de guides d'ondes, avantageusement, le deuxième réseau optique à commande de phase comprend un nombre de déphaseurs optique supérieur à celui du premier réseau optique à commande de phase.

Selon un mode de mise en œuvre, chaque déphaseur optique comprend un réseau de diffraction couplé à des moyens de déphasage destinés à imposer un déphasage au faisceau optique secondaire issu du guide d'ondes auquel est optiquement couplé le déphaseur optique considéré.

Selon un mode de mise en œuvre, le premier et le deuxième réseau à commande de phase sont agencés pour imposer un balayage, respectivement, de la première et de la deuxième surface, par respectivement le premier et le deuxième faisceau, selon la deuxième direction selon, respectivement, une première et une deuxième gamme d'angles latéraux, la première gamme d'angles latéraux présentant une étendue supérieure à celle de la deuxième gamme d'angles latéraux.

Selon un mode de mise en œuvre, la première et la deuxième poutre comprennent chacune, d'une face avant vers une face arrière, une couche avant, une couche intermédiaire et une couche arrière.

Selon un mode de mise en œuvre, la couche avant et la couche arrière comprennent chacune un matériau diélectrique, le matériau diélectrique comprend avantageusement du dioxyde de silicium.

Selon un mode de mise en œuvre, le premier et le deuxième actionneur sont agencés de sorte que la flexion susceptible d'être imposée à l'une et l'autre de la première et de la deuxième partie mobile s'effectue selon un plan perpendiculaire à une face principale, respectivement, de la première et de la deuxième poutre.

Selon un mode de mise en œuvre, le premier et le deuxième actionneur sont agencés de sorte que la torsion susceptible d'être imposée à l'une et l'autre de la première et de la deuxième partie mobile s'effectue autour d'un axe d'élongation, respectivement, de la première et de la deuxième poutre.

Selon un mode de mise en œuvre, le premier et le deuxième l'actionneur comprennent chacun au moins un des moyens choisis parmi : des moyens des électrostatiques, des moyens magnétiques, des moyens piézoélectriques, des moyens thermiques.

Selon un mode de mise en œuvre, ledit scanner optique comprend également un support sur une face principale duquel reposent, par la première et la deuxième partie fixe, la première et la deuxième poutre.

**BRÈVE DESCRIPTION DES DESSINS**

D'autres caractéristiques et avantages apparaîtront dans la description qui va suivre d'un scanner optique selon l'invention, donnés à titre d'exemples non limitatifs, en référence aux dessins annexés dans lesquels :

La figure 1 illustre une première architecture d'un dispositif de balayage lumineux connu de l'état de la technique, le dispositif comprend notamment deux micro-miroirs montés pivotant chacun autour d'un axe pivot différent et non parallèles ;

La figure 2 illustre une deuxième architecture d'un dispositif de balayage lumineux connu de l'état de la technique, le dispositif comprend notamment un micro-miroir monté pivotant autour de deux axes pivot différents et non parallèles ;

La figure 3 est une représentation schématique d'un exemple de mise en œuvre d'un scanner optique selon la présente invention selon une vue à l'aplomb de la face principale ;

La figure 4a est une représentation schématique d'un scanner élémentaire, dit premier scanner, selon un plan de coupe perpendiculaire à la première face avant et comprenant le premier axe $Y_1Y_1$' selon la présente invention ;

La figure 4b est une représentation schématique d'un scanner élémentaire, dit deuxième scanner, selon un plan de coupe perpendiculaire à la deuxième face avant et comprenant le deuxième axe $Y_2Y_2$' selon la présente invention ;

La figure 5 est une représentation schématique d'une surface susceptible d'être balayée par un scanner élémentaire au moyen d'un faisceau extrait ;

La figure 6 est une représentation partielle d'un scanner optique selon une vue à l'aplomb de la face avant et illustrant un agencement des guides d'ondes susceptibles d'être mis en œuvre dans le cadre de la présente invention ;

La figure 7 est une illustration d'un déphaseur optique selon une première architecture susceptible d'être mis en œuvre dans le cadre de la présente invention ;

La figure 8 est une illustration d'un déphaseur optique (issu du document [3] cité à la fin de la description) selon une deuxième architecture susceptible d'être mis en œuvre dans le cadre de la présente invention ;

La figure 9 est une illustration de la première et de la deuxième surface susceptibles d'être balayées par, respectivement, le premier faisceau et le deuxième faisceau ;

La figure 10 est une représentation schématique d'un scanner optique pourvu de deux paires de scanners élémentaire ;

Les figures 11, 12, 13, 14, 15, 16 sont des représentations schématiques de différentes étapes susceptibles d'être mises en œuvre pour la réalisation de deux poutres d'épaisseurs différentes.

**EXPOSÉ DÉTAILLÉ DE MODES DE RÉALISATION PARTICULIERS**

La présente invention concerne un scanner pourvu d'une pluralité de scanners élémentaires, et notamment deux scanners élémentaires, dits respectivement premier et deuxième scanner. En particulier, le premier scanner et le deuxième scanner sont agencés pour balayer, chacun avec un faisceau optique, respectivement, une première surface et une deuxième surface incluse dans la première surface et d'une étendue inférieure à cette dernière.

Ainsi la figure 3 illustre de manière schématique un exemple de scanner optique 10 selon la présente invention.

Le scanner 10 comprend notamment un support 20 fixe pourvu d'une face principale 21. Le support 20 peut notamment être obtenu à partir d'un substrat semi-conducteur, par exemple du silicium.

Le scanner optique 10 comprend également au moins une source optique 50 apte à émettre un faisceau optique principal.

Le faisceau optique principal est avantageusement quasi-monochromatique, voire monochromatique. La source optique 50 peut par exemple comprendre une source LASER.

La longueur d'onde λ peut être comprise entre 400 nm et 2500 nm, par exemple être égale à 905 nm, ou égale à 1330 nm ou encore égale à 1550 nm.

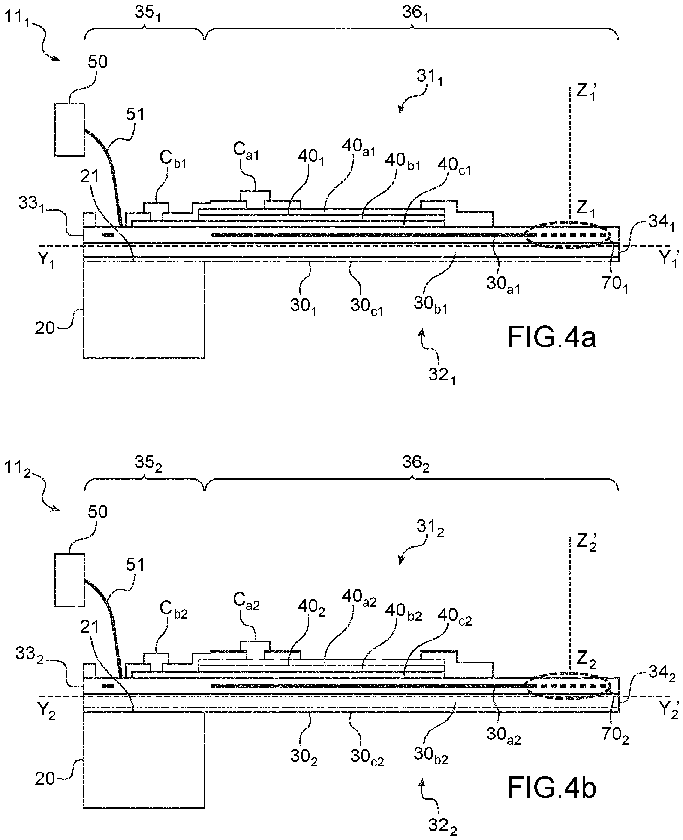

Le scanner optique 10 comprend également au moins deux scanners élémentaires 11 dits, respectivement, premier $11_1$ et deuxième $11_2$ scanners (figures 4a et 4b).

Il apparaîtra de manière évidente à la lumière de la description qui suit que l'invention n'est pas limitée à deux scanners élémentaires.

Le premier $11_1$ et le deuxième $11_2$ scanners comprennent chacun une poutre dite, respectivement, première poutre $30_1$ et deuxième poutre $30_2$.

Une poutre présente typiquement une forme allongée. Plus particulièrement, une poutre, selon la présente invention, s'étend, selon un axe d'élongation, entre deux extrémités dites, respectivement, extrémité fixe et extrémité libre. Plus précisément, la première poutre $30_1$ s'étend, selon un premier axe $Y_1Y_1'$, d'une première extrémité fixe $33_1$ vers une deuxième extrémité fixe $34_1$. De manière équivalente, la deuxième poutre $30_2$ s'étend, selon un deuxième axe $Y_2Y_2'$, d'une deuxième extrémité fixe $33_2$ vers une deuxième extrémité libre $34_2$.

Par ailleurs, il est entendu qu'une poutre, selon la présente invention, est pourvue de deux faces parallèles entre elles et, dites face avant et face arrière. Plus précisément, la première poutre $30_1$ comprend une première face avant $31_1$ et une première face arrière $32_1$. De manière équivalente, la deuxième poutre $30_2$ comprend une deuxième face avant $31_2$ et une deuxième face arrière $32_2$.

Une poutre peut présenter une épaisseur comprise entre 1 $\mu$m et plusieurs centaines de $\mu$m, une longueur comprise entre 100 $\mu$m et plusieurs millimètres, et une largeur comprise entre 10$\mu$m et plusieurs millimètres.

L'épaisseur de la poutre est définie comme la distance séparant la face avant et la face arrière. Sa longueur est sa dimension mesurée selon la direction définie par l'axe d'élongation tandis que sa largeur est sa dimension mesurée selon une direction perpendiculaire à celle définie par l'axe d'élongation et l'épaisseur de ladite poutre.

Le premier axe $Y_1Y_1'$ et le deuxième axe $Y_2Y_2'$, sont avantageusement parallèles.

La première $30_1$ et la deuxième poutre $30_2$ comprennent chacune une partie mobile 36, dite, respectivement, première partie mobile $36_1$ et deuxième partie mobile $36_2$, ainsi qu'une partie fixe, dite, respectivement, première partie fixe $35_1$ et deuxième partie fixe $35_2$. La première $30_1$ et la deuxième poutre $30_2$ sont notamment solidaires du support 20 par leurs parties fixes $35_1$ et $35_2$. En particulier, les parties fixes $35_1$ et $35_2$ reposent sur la face principale 21.

Par « partie mobile », on entend une partie de poutre susceptible de subir une déformation par flexion. Par exemple, la partie mobile peut subir une flexion selon une direction d'un plan comprenant l'axe d'élongation et perpendiculaire à la face avant.

Chacune des deux poutres $30_1$ et $30_2$ peut comprendre, respectivement, un premier empilement et un deuxième empilement.

A cet égard, le premier empilement peut comprendre, de la première face avant $31_1$ vers la première face arrière $32_1$, une première couche avant $30_{a1}$, une première couche intermédiaire $30_{b1}$, et une première couche arrière $30_{c1}$.

De manière équivalente, le deuxième empilement peut comprendre, de la deuxième face avant $31_2$ vers la deuxième face arrière $32_2$, une deuxième couche avant $30_{a2}$, une deuxième couche intermédiaire $30_{b2}$, et une deuxième couche arrière $30_{c2}$.

La première couche avant $30_{a1}$, la première couche arrière $30_{c1}$, la deuxième couche avant $30_{a2}$, et la deuxième couche arrière $30_{c2}$ peuvent chacune comprendre un matériau diélectrique. Le matériau diélectrique comprend avantageusement du dioxyde de silicium.

La première couche intermédiaire $30_{b1}$ et la deuxième couche intermédiaire $30_{b2}$, comprennent avantageusement du silicium poly cristallin.

Le premier $11_1$ et le deuxième $11_2$ scanners comprennent chacun un actionneur, dits, respectivement un premier actionneur $40_1$ et deuxième actionneur $40_2$. Chacun de ces actionneurs $40_1$ et $40_2$ est notamment agencé pour imposer une flexion ou une torsion, respectivement, à la première partie mobile $36_1$ et à la deuxième partie mobile $36_2$.

Il est entendu que la flexion d'une partie mobile susceptible d'être imposée par un actionneur, correspond à une déformation ou incurvation de ladite partie mobile selon un plan, dit plan de flexion, perpendiculaire à la face avant de la poutre, et qui comprend son axe d'élongation.

De manière équivalente, une torsion d'une partie mobile correspond à une déformation de ladite partie mobile autour de son axe d'élongation.

Ainsi, le plan de flexion de la première poutre $30_1$ est perpendiculaire à la première face avant $31_1$ et comprend le premier axe $Y_1Y_1'$.

De manière équivalente, le plan de flexion de la deuxième poutre $30_2$ est perpendiculaire à la deuxième face avant $31_2$ et comprend le deuxième axe $Y_2Y_2'$.

Un actionneur selon la présente invention peut comprendre au moins un des moyens choisis parmi : des moyens des électrostatiques, des moyens magnétiques, des moyens piézoélectriques, des moyens thermiques. L'invention n'est toutefois pas limitée à ces seuls moyens.

L'actionneur peut être commandé par des moyens de commande, par exemple des moyens de commande électronique, notamment équipés d'un microprocesseur ou d'un calculateur. Ces moyens de commande peuvent notamment être adaptés pour faire vibrer la poutre en flexion. Ces moyens de commande peuvent en particulier imposer une vibration à la poutre en flexion ou en torsion. Cette vibration peut notamment présenter une fréquence égale à la fréquence de résonnance de la poutre.

L'actionneur peut notamment comprendre une couche de matériau piézoélectrique intercalée entre deux électrodes destinées à imposer une tension électrique non-nulle de part et d'autre de ladite couche de matériau piézoélectrique.

Dans l'exemple représenté à la figure 4a, le premier actionneur $40_1$ comprend une première couche de matériau piézoélectrique $40_{b1}$ intercalée entre une première électrode avant $40_{a1}$ et une première électrode arrière $40_{c1}$.

De manière équivalente, dans l'exemple représenté à la figure 4b, le deuxième actionneur $40_2$, comprend une deuxième couche de matériau piézoélectrique $40_{b2}$ intercalée entre une deuxième électrode avant $40_{a2}$ et une deuxième électrode arrière $40_{c2}$.

Par ailleurs, le premier actionneur $40_1$ et le deuxième actionneur $40_2$ sont chacun pourvus, respectivement, de premiers contacts $C_{a1}$ et $C_{b1}$ d'une part, et de deux contacts $C_{a2}$ et $C_{b2}$ d'autre part, et au niveau desquels une tension d'alimentation peut être appliquée. Cette tension d'alimentation peut notamment être appliquée avec les moyens de commande. Sous l'action de cette tension électrique, la couche de matériau piézoélectrique se contracte, et entraîne avec elle la partie mobile de la poutre en flexion. La direction de fléchissement de la couche de matériau piézoélectrique peut dépendre du signe de la tension électrique imposée par les électrodes, notamment lorsque ladite couche comprend un matériau piézoélectrique non ferroélectrique.

L'amplitude de fléchissement, quant à elle, peut dépendre de nombreux paramètres parmi lesquelles on peut citer : la raideur de la poutre, l'amplitude de la tension imposée par les électrodes, l'épaisseur de la couche de matériau piézoélectrique.

De manière avantageuse, il est possible de faire vibrer la poutre, et plus particulièrement à sa fréquence de résonnance afin de conférer au scanner un meilleur facteur de qualité, et bénéficier du facteur de qualité mécanique pour amplifier le mouvement.

À cet égard, la fréquence de résonance d'une poutre de longueur L, de largueur b, d'épaisseur h et de densité p et de module d'Young E suit à la relation suivante :

$$\left(\frac{E}{\rho}\right)^{1/2}\frac{h}{L^2}$$

Ainsi, la fréquence de résonance augmente avec l'épaisseur et diminue lorsque sa longueur augmente. Cette diminution en fonction de l'épaisseur suit néanmoins une loi au carré et est donc plus marquée lorsqu'il s'agit de modifier la longueur.

En d'autres termes, la fréquence de résonance de la poutre peut être ajustée par son épaisseur et sa longueur.

La couche de matériau piézoélectrique peut comprendre au moins l'un des matériaux choisis parmi : PZT (Titano-Zirconate de Plomb) ou AIN (nitrure d'aluminium). D'autres matériaux piézoélectriques sont envisageables.

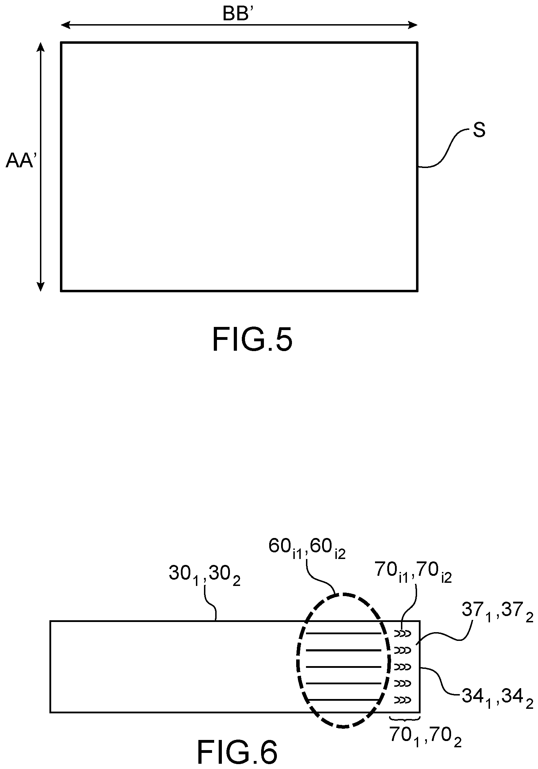

Le premier $11_1$ et le deuxième $11_2$ scanners peuvent également comprendre chacun une pluralité de guides d'ondes, dite, respectivement, première $60_{i1}$ et deuxième $60_{i2}$ pluralité de guides d'ondes disposés sur ou dans, respectivement, la première $36_1$ et la deuxième $36_2$ partie mobile (figure 6). Les guides d'ondes illustrés à la figure 6 sont disposés parallèlement à l'axe d'élongation, et de sorte que le rapport entre leur espacement (en $\mu$m) et la longueur d'onde $\lambda$ (en nm) soit compris entre 0,5 et 10.

Les guides d'ondes peuvent par exemple être d'une longueur comprise entre une centaine de microns et une dizaine de millimètres, et être espacés les uns des autres d'une distance comprise entre une centaine de microns et une dizaine de millimètres.

Chacune des pluralités de guides d'ondes $60_i$ et $60_{i2}$ est notamment destinée à diviser le faisceau optique principal en, respectivement, une première et deuxième pluralité de faisceaux optiques secondaires.

Le couplage de la source optique 50 avec les guides d'ondes peut être exécuté avec des moyens de couplage 51 (figures 3, 4a et 4b) et notamment avec une ou plusieurs fibres optiques.

Un scanner élémentaire selon la présente invention comprend également un réseau optique à commande de phase disposé dans ou sur la partie mobile du scanner élémentaire à partir duquel le faisceau optique principal émis pour la source optique 50 est extrait en partie sous forme d'un faisceau extrait.

Le réseau à commande de phase peut être piloté par les moyens de commande.

Ainsi, selon l'exemple décrit dans la présente invention, le réseau optique à commande de phase du premier scanner $11_1$, dit premier réseau à commande de phase $70_1$ (figure 4a) est agencé pour permettre l'extraction du faisceau optique principal sous forme d'un premier faisceau, tandis le réseau optique à commande de phase du deuxième scanner $11_2$, dit deuxième réseau optique à commande de phase $70_2$ (figure 4b), est agencé pour permettre l'extraction du faisceau optique principal sous forme d'un deuxième faisceau.

Le premier réseau optique à commande de phase $70_1$ et le deuxième réseau optique à commande de phase $70_2$ comprennent chacun une pluralité de déphaseurs, dite, respectivement, première pluralité de déphaseurs $70_{i1}$ et deuxième pluralité de déphaseurs $70_{i2}$.

Chaque déphaseur de la première et de la deuxième pluralité de déphaseurs optiques est avantageusement couplé à un guide d'ondes, respectivement, de la première et de la deuxième pluralité de guides d'ondes.

De manière avantageuse, chaque déphaseur optique $70_{i1}$ et $70_{i2}$ comprend un réseau de diffraction couplé à des moyens de déphasage destinés à imposer un déphasage au faisceau optique secondaire issu du guide d'ondes auquel est optiquement couplé le déphaseur optique considéré.

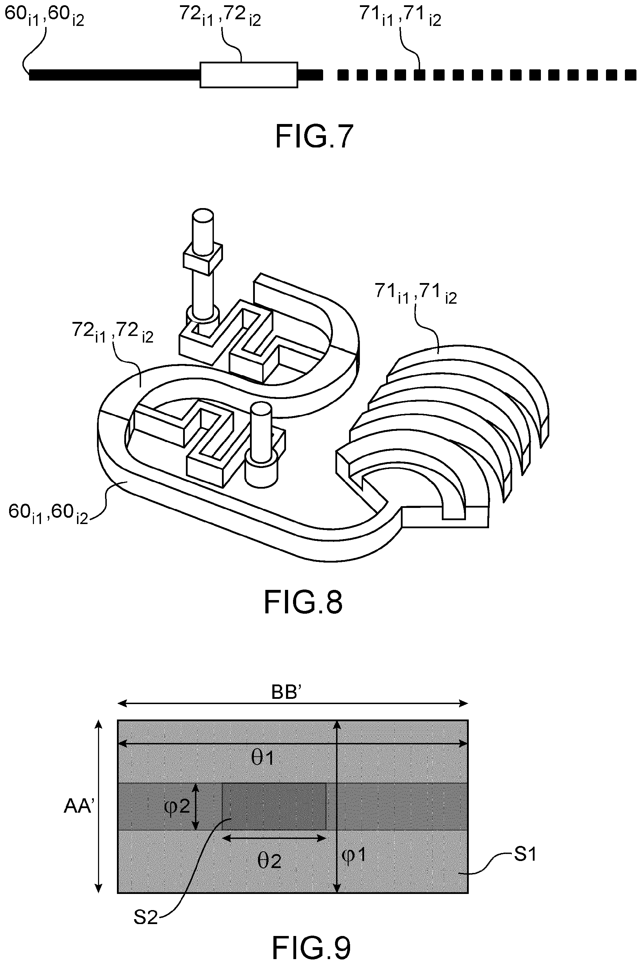

La figure 7 est une illustration d'un déphaseur optique selon une première architecture susceptible d'être mise en œuvre dans le cadre de la présente invention. En particulier, le réseau de diffraction est formé de plots alignés dans le prolongement du guide d'ondes, tandis que les moyens de déphasage peuvent comprendre un élément chauffant disposé à l'aplomb du guide d'ondes et destinés à chauffer localement ce dernier afin de moduler son indice de réfraction.

La figure 8 est une illustration d'un déphaseur optique selon une deuxième architecture susceptible d'être mise en œuvre dans le cadre de la présente invention. En particulier, le réseau de diffraction est formé d'arcs pleins alignés, tandis que les moyens de déphasage peuvent comprendre un élément chauffant destiné à chauffer localement le guide d'ondes $60i$ afin de moduler son indice de réfraction.

De manière avantageuse, les guides d'ondes et/ou les réseaux de diffraction peuvent comprendre du nitrure de silicium.

Les déphaseurs optiques peuvent être agencés en ligne perpendiculairement à l'axe d'élongation de la poutre.

De manière alternative, les déphaseurs optiques peuvent être agencés de manière matricielle.

Par « agencé de manière matricielle », on entend agencés selon N lignes et M colonnes. Selon cette troisième architecture, un scanner élémentaire peut ainsi balayer l'espace selon deux angles de propagation.

Un scanner élémentaire, tel que décrit ci-avant, en fonctionnement, est ainsi apte à balayer une surface S au moyen du faisceau extrait. La surface S est représentée sous forme d'un rectangle à la figure 5. Toutefois, cette dernière peut correspondre à la surface d'un objet, et plus particulièrement la surface d'un objet à 3 dimensions.

En particulier, le balayage de ladite surface peut être exécuté selon une première direction AA' et selon une deuxième direction BB' (figure 5), qui peuvent avantageusement être perpendiculaires entre elles.

Le balayage de la surface S selon la première direction AA' est notamment assuré par la flexion de la poutre formant le scanner élémentaire.

Plus particulièrement, lorsque la poutre est au repos, le faisceau extrait, dit faisceau au repos, est émis selon une direction, dite direction au repos (dite première direction au repos $Z_1Z_1'$ pour le premier scanner et deuxième direction au repos $Z_2Z_2'$ pour le deuxième scanner). La position au repos peut notamment être perpendiculaire à la face avant de la poutre au repos.

Dès lors qu'une flexion est imposée à la poutre, le faisceau extrait subit alors une déflexion, selon un angle $\varphi$, dit angle longitudinal, par rapport à la direction au repos et dans le plan de flexion du scanner élémentaire considéré. Dépendamment de la structure de la poutre, cet angle longitudinal peut varier dans une gamme d'angles longitudinaux $\Delta\varphi$ imposée par les paramètres physiques et géométriques de la poutre. Ainsi, plus la gamme d'angles longitudinaux $\Delta\varphi$ est réduite, plus l'étendue de la surface S selon la première direction AA' diminue.

Le balayage de la surface S selon la deuxième direction BB' est assuré par le réseau optique à commande de phase du scanner élémentaire. Notamment dès lors qu'il est mis en œuvre, le réseau optique à commande de phase impose une déflexion au faisceau extrait, selon un angle $\theta$, dit angle latéral, par rapport à la direction au repos et dans un plan, dit plan latéral, perpendiculaire au plan de flexion et qui comprend la direction au repos. Dépendamment de la structure du réseau optique à commande de phase, cet angle latéral, peut varier dans une gamme d'angles latéraux $\Delta\theta$ imposée par les paramètres physiques et géométriques du réseau optique à commande de phase.

Ainsi, plus la gamme d'angles latéraux $\Delta\theta$ est réduite, plus l'étendue de la surface S selon la deuxième direction BB' diminue.

La mise en œuvre d'une déflexion du faisceau extrait selon l'une et l'autre de la gamme d'angles longitudinaux $\Delta\varphi$ et de la gamme d'angles latéraux $\Delta\theta$ permet ainsi de balayer toute la surface S.

Ainsi, le premier scanner $11_1$ est agencé pour balayer une première surface S1 selon l'une et l'autre de la première gamme d'angles longitudinaux $\Delta\varphi_1$ et de la deuxième gamme d'angles latéraux $\Delta\varphi_1$, tandis que le deuxième scanner $11_2$ est agencé pour balayer une deuxième surface S2 selon l'une et l'autre de la deuxième gamme d'angles longitudinaux $\Delta\varphi_2$ et de la deuxième gamme d'angles latéraux $\Delta\theta_2$. Cette variation de balayage d'angles longitudinaux peut être modulée par la polarisation appliquée sur le matériau piézoélectrique

En particulier, et selon la présente invention, la deuxième surface S2 est d'une étendue inférieure à celle de la première surface S1 et est incluse dans la première surface S1 (figure 9). En d'autres termes, le deuxième scanner $11_2$ est agencé pour balayer une section de la surface balayée par le premier scanner $11_1$. Cet agencement permet ainsi balayer une surface, par exemple à des fin d'imagerie avec différents niveaux de résolution, sans toutefois affecter la compacité du scanner optique 10.

Selon un premier mode de mise en œuvre, le premier scanner $11_1$ et le deuxième scanner $11_2$ sont agencés de sorte que la deuxième gamme d'angles longitudinaux $\Delta\varphi_2$ soit plus restreinte que la première gamme d'angles longitudinaux $\Delta\varphi_1$.

Selon une première variante de ce premier mode de mise en œuvre, cette limitation peut notamment être imposée par une polarisation différente des poutres.

A cet égard, et tel que précisé dans le document [2] cité à la fin de la description, plus le champ de polarisation électrique imposé à la couche de matériau piézoélectrique (par exemple une couche de PZT) est élevé, plus la flexion de l'ensemble formé par ladite couche et la poutre est importante. Cette flexion est dépendante non seulement des propriétés mécaniques et géométrique de la poutre mais également du champ de polarisation électrique imposé à la couche de matériau piézoélectrique.

Selon une deuxième variante de ce premier mode de mise en œuvre, cette limitation peut notamment être imposée par des poutres de longueurs différentes dans le cadre d'un fonctionnement à la fréquence de résonance.

En effet, l'amplitude de fléchissement d'une poutre, pour une charge donnée, est directement proportionnelle à la puissance quatre de sa longueur et inversement proportionnelle au produit de son épaisseur par son moment d'inertie.

En d'autres termes, l'amplitude de fléchissement d'une poutre croit avec sa longueur et/ou lorsque son épaisseur diminue.

Ainsi, selon cette deuxième variante, la première poutre présente avantageusement une longueur, dite première longueur L1, inférieure à la longueur, dite deuxième longueur L2, de la deuxième poutre.

Selon une troisième variante alternative ou complémentaire à l'une et/ou l'autre de la première et de la deuxième variante, la première poutre présente avantageusement une épaisseur, dite épaisseur E1, supérieure à l'épaisseur, dite deuxième épaisseur E2, de la deuxième poutre. En effet, tel qu'indiqué précédemment, l'amplitude de fléchissement d'une poutre, pour une charge donnée, croit lorsque son épaisseur diminue. Par conséquent, pour une charge donnée, l'amplitude de fléchissement de la première poutre est inférieure celle de la deuxième poutre.

Les considérations d'épaisseur et de longueur de poutre ont également une influence sur leur fréquence de résonnance. En effet, la fréquence de résonnance d'une poutre est proportionnelle à son épaisseur et inversement proportionnelle au carré de sa longueur. En d'autres termes, dans le cadre de la deuxième variante, la première poutre présente également une fréquence de résonnance supérieure à celle de la deuxième poutre. De manière équivalente, et dans le cadre de la troisième variante, la première poutre présente une fréquence de résonnance supérieure à celle de la deuxième poutre.

Ainsi, le scanner optique selon la présente invention permet de balayer la première surface, avec le premier scanner, à une fréquence relativement élevée par exemple pour détecter rapidement une zone d'intérêt et destinée à être balayée cette fois avec le deuxième scanner. Le balayage avec le deuxième scanner est alors exécuté à plus forte résolution afin de révéler les détails au sein de la zone d'intérêt passés inaperçus lors du premier balayage. Cette résolution peut notamment être ajustée par le nombre et/ou la densité de guides d'onde, et/ou le dispositif d'extraction de la lumière de chaque guide d'onde.

Selon un deuxième mode de mise en œuvre, complémentaire ou alternatif au premier mode de mise en œuvre, le premier et le deuxième réseau à commande de phase sont agencés de sorte que la première gamme d'angles latéraux présente une étendue supérieure à celle de la deuxième gamme d'angles latéraux.

Toujours selon ce deuxième mode de mise en œuvre, le deuxième réseau à commande de phase présente une résolution supérieure à celle du premier réseau à commande de phase. Ce résultat peut notamment être atteint en formant un deuxième réseau à commande de phase qui comprend un plus grand nombre (ou une plus grande densité) de déphaseurs optiques que le premier réseau à commande de phase.

Le scanner optique n'est pas limité à deux scanners élémentaires et peut en comprendre un nombre supérieur.

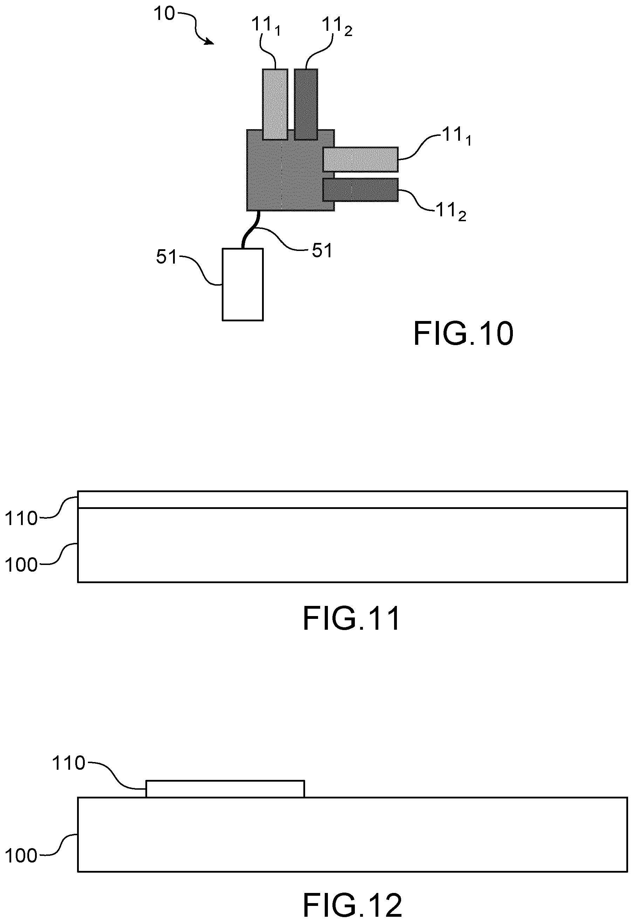

Par exemple, la figure 10 représente de manière schématique un scanner optique pourvu de quatre scanners élémentaires, formant deux paires de scanners élémentaires. Chacune des deux paires comprend un premier scanner et un deuxième scanner tel que décrit ci-avant.

Le scanner optique selon la présente invention permet ainsi de répondre aux problématiques relatives à la résolution du balayage tout en conservant la compacité dudit scanner.

Par ailleurs, ce scanner optique, qui ne met pas en œuvre de micro-miroirs, ne nécessite pas d'alignement et reste simple à mettre en œuvre.

En outre, en dépit de leurs différences, les poutres des différents scanners élémentaires peuvent avantageusement être formées de manière collective.

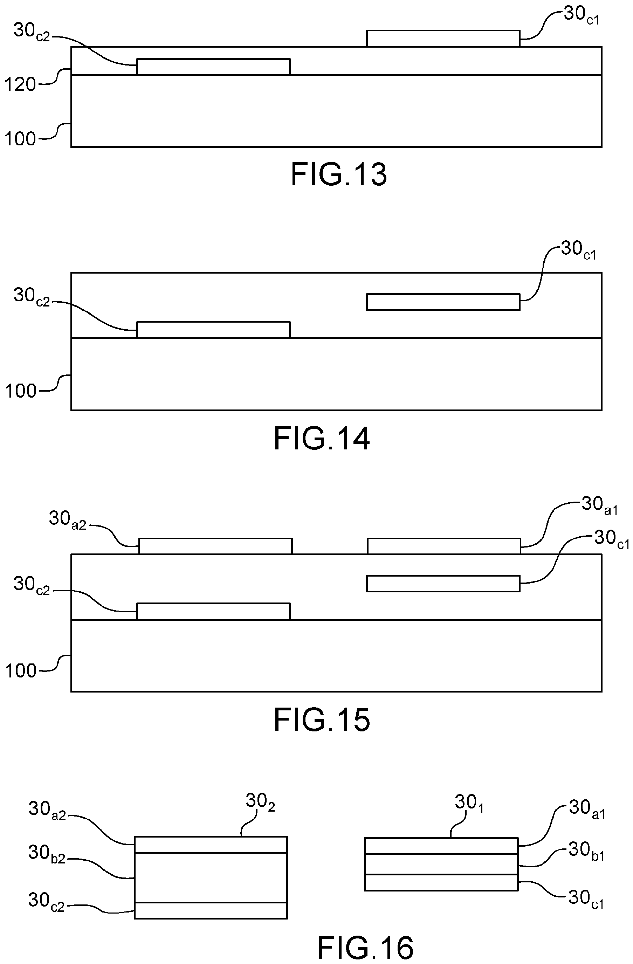

A cet égard, les figures 11 à 16, représentent des étapes de fabrication d'une première poutre et d'une deuxième poutre d'épaisseurs différentes et susceptibles d'être mises en œuvre dans le cadre d'un procédé de fabrication d'un scanner optique.

Le procédé comprend une étape a) de formation d'une couche d'oxyde de silicium 110 par oxydation thermique d'un substrat de silicium 100.

Cette étape a) est alors suivie d'une étape b) qui comprend une séquence de photolithographie/gravure destinée à délimiter la deuxième poutre $30_2$. Le reliquat de la couche 110 à l'issue de l'étape b) forme la deuxième couche arrière $30_{c2}$ de la deuxième poutre.

L'ensemble est ensuite recouvert d'une couche de poly silicium 120 qui est éventuellement aplanie.

Une étape c) de formation de la première couche arrière $30_{c1}$ est ensuite exécutée. Cette étape peut notamment impliquer, dans l'ordre, le dépôt d'une couche d'oxyde de silicium, et une séquence de photolithographie/gravure afin de délimiter dans ladite couche d'oxyde de silicium la première couche arrière $30_{c1}$.

Une étape d) de formation d'une autre couche de silicium poly cristallin est exécutée. Cette autre couche vient en recouvrement de la couche de silicium poly cristallin et de la première couche arrière $30_{c1}$.

La première couche avant $30_{a1}$ et la deuxième couche avant $30_{a2}$ sont ensuite formées lors de l'exécution d'une étape e). Cette étape peut impliquer la formation d'une couche d'oxyde de silicium suivie d'une séquence de photolithographie/gravure.

Une étape f) de gravure peut ensuite être réalisée afin de libérer la première poutre $30_1$ et la deuxième poutre $30_2$ qui présentent chacune une épaisseur différente.

Le scanner 10 selon la présente invention peut avantageusement être mis en oeuvre dans un projecteur d'images de taille réduite (par exemple un pico-projecteur) dans un équipement électronique mobile, et plus particulièrement, un téléphone portable, une montre connectée, dans des équipements de projection intra rétinienne (pour la réalité augmentée).

La scanner peut également être mis en œuvre dans le cadre d'application 3D, et notamment d'imagerie 3D.

Le scanner 10 peut également former la partie active d'un LIDAR, et par exemple être mis en œuvre dans un véhicule autonome.

## RÉFÉRENCES

[1] Sven Holmstrom et al., "MEMS laser scanners : a review", Journal of Microelectromechanical Systems . April 2014, DOI: 10.1109/JMEMS.2013.2295470;
[2] Section 13.5.3 de l'ouvrage « Intégration of Ferroelectric and Piezoelectric Thin Films » de Defay;
[3] Jie Sun et al., « Large-scale nanophotonic phased array », Nature, 11727, vol 493, 195-199, January 2013.

## Revendications

1. Scanner optique (10) qui comprend :

   - une source optique apte à émettre un faisceau optique principal ;
   - au moins deux scanners élémentaires, dits, respectivement, premier ($11_1$) et deuxième ($11_2$) scanner, et qui comprennent respectivement :
   - une première ($30_1$) et une deuxième ($30_2$) poutre pourvues, respectivement, d'une première ($36_1$) et d'une deuxième ($36_2$) partie mobile d'une part, et d'une première ($35_1$) et d'une deuxième ($35_2$) partie fixe d'autre part ;
   - un premier ($40_1$) et un deuxième ($40_2$) actionneur agencés pour imposer une flexion ou une torsion, respectivement à la première et la deuxième partie mobile ;
   - un premier ($70_1$) et un deuxième ($70_2$) réseau optique à commande de phase disposés sur ou dans, respectivement, la première et la deuxième partie mobile et au niveau desquels le faisceau optique principal est extrait, en partie, sous forme, respectivement, d'un premier et d'un deuxième faisceau ;

le premier et le deuxième scanner étant agencés pour balayer, selon une première AA' et une deuxième BB' direction, au moyen du premier et du deuxième faisceau, respectivement, une première S1 et une deuxième S2 surface, la deuxième surface étant d'une étendue inférieure à celle de la première surface et incluse dans la première surface.

2. Scanner optique selon la revendication 1, dans lequel la première et la deuxième poutre sont agencées de sorte que la flexion de l'une et l'autre de ces deux poutres permet, respectivement, au premier et au deuxième faisceau de balayer, respectivement, la première S1 et la deuxième S2 surface selon la première direction, selon, respectivement, une première et une deuxième gamme d'angles longitudinaux, la première gamme d'angles longitudinaux présentant une étendue supérieure à celle de la deuxième gamme d'angles longitudinaux.

3. Scanner optique selon l'une des revendications 1 ou 2, dans lequel la première et la deuxième partie mobile sont agencées pour se voir imposer une flexion ou une torsion, respectivement, d'une première et d'une deuxième amplitude, la deuxième amplitude étant strictement inférieure à la première amplitude.

4. Scanner optique selon l'une des revendications 1 à 3, dans lequel la première partie mobile présente une épaisseur, dite première épaisseur, supérieure à l'épaisseur, dite deuxième épaisseur, de la deuxième partie mobile.

5. Scanner optique selon l'une des revendications 1 à 4, dans lequel la première partie mobile présente une longueur, dite première longueur, inférieure à la longueur, dite deuxième longueur de la deuxième poutre.

6. Scanner optique selon l'une des revendications 1 à 5, dans lequel la première partie mobile présente une fréquence de vibration à la résonance, dite première fréquence, supérieure à la fréquence de vibration à la résonance, dite deuxième fréquence, de la deuxième partie mobile.

7. Scanner optique selon l'une des revendications 1 à 6, dans lequel le premier et le deuxième scanner comprennent respectivement, une première et une deuxième pluralité de guides d'ondes disposés sur ou dans, respectivement, la première et la deuxième partie mobile, chacune des pluralités de guides d'ondes étant destinée à diviser le faisceau optique principal en, respectivement, une première et deuxième pluralité de faisceaux optiques secondaires.

8. Scanner optique selon la revendication 7, dans lequel la première pluralité de guide d'ondes comprend un nombre de guides d'ondes inférieur à celui de la deuxième pluralité de guides d'ondes.

9. Scanner optique selon la revendication 7 ou 8, dans lequel le premier et le deuxième réseau optique à commande de phase comprennent, respectivement, une première et une deuxième pluralité de déphaseurs optiques, chaque déphaseur optique de la première et de la deuxième pluralité de déphaseur optique étant couplé à un guide d'ondes, respectivement, de la première et de la deuxième pluralité de guides d'ondes, avantageusement, le deuxième réseau optique à commande de phase comprend un nombre de déphaseurs optique supérieur à celui du premier réseau optique à commande de phase.

10. Scanner optique selon la revendication 9, dans lequel chaque déphaseur optique comprend un réseau de diffraction couplé à des moyens de déphasage destinés à imposer un déphasage au faisceau optique secondaire issu du guide d'ondes auquel est optiquement couplé le déphaseur optique considéré.

11. Scanner optique selon l'une des revendications 1 à 10, dans lequel le premier et le deuxième réseau à commande de phase sont agencés pour imposer un balayage, respectivement, de la première et de la deuxième surface, par respectivement le premier et le deuxième faisceau, selon la deuxième direction selon, respectivement, une première et une deuxième gamme d'angles latéraux, la première gamme d'angles latéraux présentant une étendue supérieure à celle de la deuxième gamme d'angles latéraux.

12. Scanner optique selon l'une des revendications 1 à 11, dans lequel la première et la deuxième poutre comprennent chacune, d'une face avant vers une face arrière, une couche avant, une couche intermédiaire et une couche arrière.

13. Scanner optique selon la revendication 12, dans lequel la couche avant et la couche arrière comprennent chacune un matériau diélectrique, le matériau diélectrique comprend avantageusement du dioxyde de silicium.

14. Scanner optique selon l'une des revendications 1 à 13, dans lequel le premier et le deuxième actionneur sont agencés de sorte que la flexion susceptible d'être imposée à l'une et l'autre de la première et de la deuxième partie mobile s'effectue selon un plan perpendiculaire à une face principale, respectivement, de la première et de la deuxième poutre.

15. Scanner optique selon l'une des revendications 1 à 14, dans lequel le premier et le deuxième l'actionneur comprennent chacun au moins un des moyens choisis parmi : des moyens des électrostatiques, des moyens magnétiques, des moyens piézoélectriques, des moyens thermiques.

16. Scanner optique selon des revendications 1 à 15, dans lequel ledit scanner optique comprend également un support sur une face principale duquel reposent, par la première et la deuxième partie fixe, la première et la deuxième poutre.

**Patentansprüche**

1. Optischer Scanner (10), der umfasst:

   - eine optische Quelle, die imstande ist, einen optischen Hauptstrahl zu senden;
   - mindestens zwei elementare Scanner, bezeichnet jeweils als erster ($11_1$) und zweiter ($11_2$) Scanner, und die jeweils umfassen:

      - einen ersten ($30_1$) und einen zweiten ($30_2$) Balken, die jeweils mit einem ersten ($36_1$) und einem zweiten ($36_2$) beweglichen Teil zum einen und einem ersten ($35_1$) und einem zweiten ($35_2$) festen Teil zum anderen versehen sind;
      - einen ersten ($40_1$) und einen zweiten ($40_2$) Aktuator, die eingerichtet sind, um den jeweils ersten und den zweiten beweglichen Teil einer Biegung oder einer Verdrehung auszusetzen;
      - ein erstes ($70_1$) und ein zweites ($70_2$) optisches Netzwerk mit Phasensteuerung, die auf oder im jeweils ersten und zweiten beweglichen Teil angeordnet sind und im Bereich derselben der optische Hauptstrahl zum Teil in Form von jeweils einem ersten und einem zweiten Strahl extrahiert wird;

   wobei der erste und der zweite Scanner eingerichtet sind, um gemäß einer ersten AA' und einer zweiten BB' Richtung mittels des ersten und des zweiten Strahls jeweils eine erste S1 und eine zweite S2 Oberfläche abzutasten, wobei die zweite Oberfläche eine kleinere Ausdehnung als die erste Oberfläche hat und in der ersten Oberfläche inbegriffen ist.

2. Optischer Scanner nach Anspruch 1, wobei der erste und der zweite Balken derart eingerichtet sind, dass die Biegung des einen und des anderen dieser zwei Balkens jeweils dem ersten und dem zweiten Strahl erlaubt, jeweils die erste S1 und die zweite S2 Oberfläche gemäß der ersten Richtung jeweils gemäß einem ersten und einem zweitem Längswinkelbereich abzutasten, wobei der erste Längswinkelbereich eine größere Ausdehnung als der zweite Längswinkelbereich aufweist.

**3.** Optischer Scanner nach einem der Ansprüche 1 oder 2, wobei der erste und der zweite bewegliche Teil eingerichtet sind, um einer Biegung oder einer Verdrehung jeweils mit einer ersten und einer zweiten Amplitude ausgesetzt zu werden, wobei die zweite Amplitude strikt kleiner als die erste Amplitude ist.

**4.** Optischer Scanner nach einem der Ansprüche 1 bis 3, wobei der erste bewegliche Teil eine Dicke, bezeichnet als erste Dicke, aufweist, die größer als die Dicke, bezeichnet als zweite Dicke, des zweiten beweglichen Teils ist.

**5.** Optischer Scanner nach einem der Ansprüche 1 bis 4, wobei der erste bewegliche Teil eine Länge, bezeichnet als erste Länge, aufweist, die kleiner als die Länge, bezeichnet als zweite Länge, des zweiten Balkens ist.

**6.** Optischer Scanner nach einem der Ansprüche 1 bis 5, wobei der erste bewegliche Teil eine Resonanzvibrationsfrequenz, bezeichnet als erste Frequenz, aufweist, die größer als die Resonanzvibrationsfrequenz, bezeichnet als zweite Frequenz, des zweiten beweglichen Teils ist.

**7.** Optischer Scanner nach einem der Ansprüche 1 bis 6, wobei der erste und der zweite Scanner jeweils eine erste und eine zweite Vielzahl von Wellenleitern umfassen, die auf oder im jeweils ersten und zweiten beweglichen Teil angeordnet sind, wobei jede von den Vielzahlen von Wellenleitern bestimmt ist, den optischen Hauptstrahl in jeweils eine erste und eine zweite Vielzahl sekundärer optischer Strahlen zu teilen.

**8.** Optischer Scanner nach Anspruch 7, wobei die erste Vielzahl von Wellenleitern eine Anzahl von Wellenleitern umfasst, die kleiner als die der zweiten Vielzahl von Wellenleitern ist.

**9.** Optischer Scanner nach Anspruch 7 oder 8, wobei das erste und das zweite optische Netzwerk mit Phasensteuerung jeweils eine erste und eine zweite Vielzahl optischer Phasenschieber umfassen, wobei jeder optische Phasenschieber der ersten und der zweiten Vielzahl optischer Phasenschieber an einen Wellenleiter jeweils der ersten und der zweiten Vielzahl von Wellenleitern gekoppelt ist, wobei in vorteilhafter Weise das zweite optische Netzwerk mit Phasensteuerung eine höhere Anzahl optischer Phasenschieber als das erste optische Netzwerk mit Phasensteuerung umfasst.

**10.** Optischer Scanner nach Anspruch 9, wobei jeder optische Phasenschieber ein Diffraktionsnetz umfasst, das an Phasenschiebemittel gekoppelt ist, die bestimmt sind, den sekundären optischen Stahl aus dem Wellenleiter, an den der entsprechende optische Phasenschieber gekoppelt ist, einer Phasenverschiebung zu unterziehen.

**11.** Optischer Scanner nach einem der Ansprüche 1 bis 10, wobei das erste und das zweite Netzwerk mit Phasensteuerung eingerichtet sind, um die erste und die zweite Oberfläche durch jeweils den ersten und den zweiten Stahl gemäß der zweiten Richtung gemäß jeweils einem ersten und einem zweiten Seitenwinkelbereich einer Abtastung zu unterziehen, wobei der erste Seitenwinkelbereich eine größere Ausdehnung als der zweite Seitenwinkelbereich aufweist.

**12.** Optischer Scanner nach einem der Ansprüche 1 bis 11, wobei der erste und der zweite Balken jeweils von einer vorderen Fläche zu einer hinteren Fläche eine vordere Schicht, eine Übergangsschicht und eine hintere Schicht umfassen.

**13.** Optischer Scanner nach Anspruch 12, wobei die vordere Schicht und die hintere Schicht jeweils ein dielektrisches Material umfassen, wobei das dielektrische Material in vorteilhafter Weise Siliciumdioxid umfasst.

**14.** Optischer Scanner nach einem der Ansprüche 1 bis 13, wobei der erste und der zweite Aktuator derart eingerichtet sind, dass die Biegung, der der eine und der andere von dem ersten und dem zweiten beweglichen Teil unterzogen werden kann, gemäß einer Ebene erfolgt, die senkrecht zu einer Hauptfläche jeweils des ersten und des zweiten Balkens ist.

**15.** Optischer Scanner nach einem der Ansprüche 1 bis 14, wobei der erste und der zweite Aktuator jeweils mindestens eins der Mittel umfassen, die ausgewählt sind aus: elektrostatischen Mitteln, magnetischen Mitteln, piezoelektrischen Mitteln, thermischen Mitteln.

**16.** Optischer Scanner nach Ansprüchen 1 bis 15, wobei der optische Scanner ebenfalls einen Halter auf einer Hauptfläche umfasst, auf dem mittels des ersten und des zweiten festen Teils der erste und der zweite Balken aufliegen.

**Claims**

**1.** An optical scanner (10) which comprises:

- an optical source capable of emitting a main optical beam;
- at least two elementary scanners, referred to as first ($11_1$) and second ($11_2$) scanners respectively, and which comprise:

- a first ($30_1$) and a second beam ($30_2$) provided, respectively, with a first ($36_1$) and a second ($36_2$) movable part on the one hand, and a first and a second fixed parts on the other hand;
- a first ($40_1$) and a second ($40_2$) actuator arranged to impose flexion or torsion, respectively, to the first and the second movable parts;
- a first ($70_1$) and a second ($70_2$) optical phased array disposed on or in the first and the second movable parts, respectively, and at which the main optical beam is partly extracted, as a first and a second beam, respectively;

the first and second scanners being arranged to scan, along a first AA' and a second BB' direction, by means of the first and second beams, respectively, a first S1 and a second S2 surface, the second surface being of smaller extent than the first surface and included in the first surface.

2. The optical scanner according to claim 1, wherein the first and second beams are arranged such that the flexion of both beams allows the first and second beams to scan, respectively, the first S1 and second S2 surfaces along the first direction, according to, respectively, a first and a second range of longitudinal angles, the first range of longitudinal angles having a greater extent than the second range of longitudinal angles.

3. The optical scanner according to any of the claims 1 or 2, wherein the first and second movable parts are arranged to undergo flexion or torsion, respectively, of a first and a second amplitude, the second amplitude being strictly smaller than the first amplitude.

4. The optical scanner according to any of the claims 1 to 3, wherein the first movable part has a thickness, referred to as first thickness, greater than the thickness, referred to as second thickness, of the second movable part.

5. The optical scanner according to any of the claims 1 to 4, wherein the first movable part has a length, referred to as first length, smaller than the length, referred to as second length, of the second beam.

6. The optical scanner according to any of the claims 1 to 5, wherein the first movable part has a resonant vibration frequency, referred to as first frequency, greater than the resonant vibration frequency, referred to as second frequency, of the second movable part.

7. The optical scanner according to any of the claims 1 to 6, wherein the first and second scanners comprise, respectively, a first and a second plurality of waveguides disposed on or in, respectively, the first and second movable parts, each of the plurality of waveguides being for splitting the main optical beam into, respectively, a first and a second plurality of secondary optical beams.

8. The optical scanner according to claim 7, wherein the first plurality of waveguides comprises a smaller number of waveguides than that of the second plurality of waveguides.

9. The optical scanner according to claim 7 or 8, wherein the first and second optical phased arrays comprise, respectively, a first and second plurality of optical phase shifters, each optical phase shifter of the first and second pluralities of optical phase shifters being coupled to a waveguide, respectively, of the first and second pluralities of waveguides, advantageously, the second optical phased array comprises a greater number of optical phase shifters than the first optical phased array.

10. The optical scanner according to claim 9, wherein each optical phase shifter comprises a diffraction grating coupled to phase shifting means for imposing a phase shift to the secondary optical beam from the waveguide to which the optical phase shifter under consideration is optically coupled.

11. The optical scanner according to any of the claims 1 to 10, wherein the first and second phased arrays are arranged to impose scanning of the first and second surfaces, respectively, by the first and second beams, respectively, along the second direction according to a first and a second range of lateral angles, respectively, the first range of lateral angles having a greater extent than that of the second range of lateral angles.

12. The optical scanner according to any of the claims 1 to 11, wherein the first and second beams each comprise, from a front face to a rear face, a front layer, an intermediate layer and a rear layer.

13. The optical scanner according to claim 12, wherein the front layer and the rear layer each comprise a dielectric material, the dielectric material advantageously comprises silicon dioxide.

14. The optical scanner according to any of the claims 1 to 13, wherein the first and second actuators are arranged such that the flexion likely to be imposed to both the first and second movable parts is made in a plane perpendicular to a main face of the first and second beams respectively.

**15.** The optical scanner according to any of the claims 1 to 14, wherein the first and second actuators each comprise at least one of the means selected from: electrostatic means, magnetic means, piezoelectric means, thermal means.

**16.** The optical scanner according to any of the claims 1 to 15, wherein said optical scanner also comprises a support on a main face of which the first and second beams rest through the first and second fixed parts.

FIG.1

FIG.2

FIG.3

FIG.4a

FIG.4b

BB'

AA'

S

## FIG.5

$30_1, 30_2$

$60_{i1}, 60_{i2}$

$70_{i1}, 70_{i2}$

$37_1, 37_2$

$34_1, 34_2$

$70_1, 70_2$

## FIG.6

$60_{i1}, 60_{i2}$   $72_{i1}, 72_{i2}$   $71_{i1}, 71_{i2}$

## FIG.7

$72_{i1}, 72_{i2}$   $71_{i1}, 71_{i2}$

$60_{i1}, 60_{i2}$

## FIG.8

BB'

$\theta 1$

AA'   $\varphi 2$

$\theta 2$   $\varphi 1$   S1

S2

## FIG.9

FIG.10

FIG.11

FIG.12

$30_{c2}$

$30_{c1}$

$120$

$100$

**FIG.13**

$30_{c1}$

$30_{c2}$

$100$

**FIG.14**

$30_{a2}$

$30_{a1}$

$30_{c1}$

$30_{c2}$

$100$

**FIG.15**

$30_{a2}$

$30_2$

$30_1$

$30_{a1}$

$30_{b2}$

$30_{b1}$

$30_{c2}$

$30_{c1}$

**FIG.16**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018222727 A

**Littérature non-brevet citée dans la description**

- **SVEN HOLMSTROM et al.** MEMS laser scanners : a review. *Journal of Microelectromechanical Systems,* Avril 2014
- **DEFAY.** *Intégration of Ferroelectric and Piezoelectric Thin Films*
- **JIE SUN et al.** Large-scale nanophotonic phased array. *Nature,* Janvier 2013, vol. 493, 195-199